# EUROPÄISCHE PATENTSCHRIFT

(11) **EP 2 714 454 B1**
(45) Veröffentlichungstag und Bekanntmachung des Hinweises auf die Patenterteilung: **04.03.2015**
(21) Anmeldenummer: 12711134.2
(22) Anmeldetag: 20.03.2012
(51) Int. Cl.: B60K 26/02

(54) **PEDALWERTGEBERANORDNUNG**
PEDAL SENSOR ARRANGEMENT
ENSEMBLE CAPTEUR DE PÉDALE

(30) Priorität: 23.05.2011 DE 102011076264
(43) Veröffentlichungstag der Anmeldung: 09.04.2014
(73) Patentinhaber: Robert Bosch GmbH, 70442 Stuttgart (DE)
(72) Erfinder: CIZEK, Vaclav, 39111 Plana nad Luznici (CZ); KLESTIL, Pavel, 37006 Srubec (CZ)
(86) Internationale Anmeldenummer: PCT/EP2012/054880
(87) Internationale Veröffentlichungsnummer: WO 2012/159796

(56) Entgegenhaltungen:
- WO-A1-00/29241
- DE-A1- 2 603 651
- DE-A1- 19 536 699
- US-A1- 2005 115 355

## Beschreibung

Die vorliegende Erfindung betrifft eine Pedalwertgeberanordnung gemäß dem Oberbegriff des Anspruches 1.

### Stand der Technik

In Kraftfahrzeugen werden in zunehmendem Maße E-Gassysteme eingesetzt zur Steuerung der Leistung des Antriebsmotors, z. B. eines Verbrennungs- und/oder Elektromotors. Dabei wird von einem Fuß des Kraftfahrzeuges ein Pedal als Fahr- oder Gaspedal um eine Drehachse verschwenkt und der Drehwinkel des Pedales wird von einem Sensor erfasst. In Abhängigkeit von der von dem Sensor erfassten Stellung des Pedales wird die Leistung des Antriebsmotors gesteuert und/oder geregelt. Bei einem aktiven Fahrpedal wird von einer Motoreinheit auf das Fahrpedal eine zusätzliche Rückstellkraft aufgebracht, so dass von einem Fahrassistenzsystem des Kraftfahrzeuges haptisch an den Fuß des Fahrers eine Handlungsaufforderung übertragen werden kann.

In Pedalwertgeberanordnungen mit einem Sensor zur Erfassung der Stellung des Fahrpedales, so dass die Pedalwertgeberanordnung in einem E-Gassystem eingesetzt werden kann, umfasst diese ein Reibelement zur Erzeugung einer Reibhysterese an dem Fahrpedal. Zur Komfortsteigerung beim Bewegen des Fahrpedales erzeugt das Reibelement eine Kraft- bzw. Reibhysterese am Pedalweg zwischen der Ausgangsstellung und der Endstellung. Dadurch entspricht die erforderliche Kraft zum Betätigen des Fahrpedales derjenigen bei konventionellen Kraftfahrzeugen ohne E-Gassystem mit mechanischem Übertragungsmitteln, z. B. einem Bowdenzug, zur Übertragung der Kraft von dem Fahrpedal auf ein Drosselorgan, z. B. eine Drosselklappe, eines Verbrennungsmotors des Kraftfahrzeuges. Somit verfügt die Pedalwertgeberanordnung weiterhin über das von mechanischen Übertragungsmitteln gewohnte Gefühl bzw. die erforderliche Kraft zum Betätigen bzw. Bewegen des Fahrpedales. Das Reibelement ist durch Umspritzen mit Kunststoff beim Spritzgießen des Fahrpedales stoffschlüssig mit dem Fahrpedal aus Kunststoff verbunden. Eine derartige Verbindung ist in der Herstellung aufwendig und teuer. Das einteilige Fahrpedal aus Kunststoff verfügt über eine sichtbare Fußauflage und über einen oberen Kopfabschnitt mit einem Lager. Für optisch unterschiedliche Fahrpedale an der sichtbaren Fußauflage sind somit unterschiedliche Fahrpedale erforderlich.

Aus der WO 2006/100133 A1 ist ein Fahrpedalmodul zum Steuern der Leistung einer Antriebsmaschine, insbesondere einer Brennkraftmaschine eines Fahrzeuges, bekannt. Ein Pedalhebel ist an einem Lagerbock um eine Schwenkachse drehbar gehalten, wobei die Schwenkachse des Pedalhebels relativ zum Lagerbock durch wenigstens ein Sensorelement detektierbar ist, wobei mit Hilfe des wenigstens einen Sensorelements eine aus der Schwenkbewegung des Pedalhebels relativ zu dem Lagerbock herrührende Änderung der Richtung wenigstens eines Magnetfeldes in ein elektrisches Signal wandelbar ist. Um eine pedalkraftabhängige Hysterese zu erzeugen, ist wenigstens ein Teil einer Umfangsfläche eines Wellenzapfens mit einem Reibbelag versehen, welcher mit den zugeordneten Lagerflächen des Lagerbocks zusammenwirkt.

Die gattungsgemäße DE 195 36 699 A1 zeigt ein Fahrpedalmodul zum Steuern der Leistung einer Antriebsmaschine, mit einem über eine Lagerstelle an einer Haltestruktur gelagerten, um eine Schwenkachse über einen Schwenkwinkel schwenkbaren Pedalhebel, wobei ein die Stellung des Pedalhebels erfassender und ein entsprechendes Signal an eine Steuerung liefernder Sensor und eine Rückstellfederung zum Rückstellen des Pedalhebels in eine Ruhestellung vorgesehen sind, wobei an der Lagerstelle mindestens eine Lagerschale mit einem Lagerradius und mindestens ein in der Lagerschale gelagerter, im Lagerradius angepasster Lagerzapfen vorgesehen sind, wobei der Lagerradius so groß bemessen ist, dass eine deutlich merkbare, eine Schwenkbewegung des Pedalhebels behindernde Reibhysterese entsteht.

Die DE 100 20 486 A1 zeigt ein Fahrpedalmodul zum Steuern der Leistung einer Antriebsmaschine eines Kraftfahrzeuges mit einem über einen Lagerzapfen an einer Haltestruktur schwenkbar gelagerten Pedalhebel, mit einem eine Winkelstellung des Pedalhebels erfassenden und ein entsprechendes elektrisches Signal an eine Steuerung liefernden Sensor und mit einer Rückstellfederung mit einer ersten Wirkseite und mit einer zweiten Wirkseite, wobei die Rückstellfederung zum Rückstellen des Pedalhebels in eine Ruhestellung mit der ersten Wirkseite an dem Pedalhebel angreift, wobei an dem Pedalhebel mindestens eine im Wesentlichen konzentrisch zum Lagerzapfen verlaufende Reibfläche vorgesehen ist und dass mindestens ein an der Reibfläche anliegendes Reibelement vorgesehen ist und das Reibelement eine basisseitige Anlenkstelle und eine federseitige Anlenkstelle hat, wobei sich die Reibfläche zwischen der basisseitigen Anlenkstelle und der federseitigen Anlenkstelle befindet und die basisseitige Anlenkstelle an der Haltestruktur angelenkt ist und die zweite Wirkseite der Rückstellfederung die federseitige Anlenkstelle des Reibelements beaufschlagt.

### Offenbarung der Erfindung

### Vorteile der Erfindung

Erfindungsgemäße Pedalwertgeberanordnung für ein Kraftfahrzeug, umfassend
-- ein zwischen einer Ausgangsstellung und einer Endstellung bewegliches Fahrpedal,
-- ein Lager für das Fahrpedal,
-- ein elastisches Element, insbesondere Feder, welche auf das Fahrpedal eine Rückstellkraft in Richtung der Ausgangsstellung aufbringt, um das Fahrpedal in die Ausgangsstellung zu bewegen,
- ein Reibelement an dem Fahrpedal zur Erzeugung einer Reibhysterese an dem Fahrpedal,
wobei das Reibelement in einer Aussparung des Fahrpedales angeordnet ist, wobei
das Reibelement elastisch verformbar ist,
wobei bei der Herstellung des Fahrpedals das Reibelement in die Aussparung unter einer entsprechenden Druckkraft einschiebbar ist, wobei das Reibelement form- und/oder kraftschlüssig mit dem Fahrpedal verbunden ist.

Dadurch können Kosten bei der Herstellung des Fahrpedals und damit auch der Pedalwertgeberanordnung eingespart und es kann mit einfachen technischen Mitteln das Fahrpedal hergestellt werden.

Weitere Ausführungsformen ergeben sich aus die abhängigen Ansprüchen.

### Kurze Beschreibung der Zeichnungen

Im Nachfolgenden wird ein Ausführungsbeispiel der Erfindung unter Bezugnahme auf die beigefügten Zeichnungen näher beschrieben. Es zeigt:
- Fig. 1: eine stark vereinfachte Ansicht einer Pedalwertgeberanordnung,
- Fig. 2: eine perspektivische Ansicht eines Fahrpedales der Pedalwertgeberanordnung,
- Fig. 3: eine perspektivische Ansicht eines zweiten Teils des Fahrpedales gemäß Fig. 2,
- Fig. 4: eine Draufsicht des zweiten Teils gemäß Fig. 3,
- Fig. 5: eine Explosionsdarstellung des zweiten Teils gemäß Fig. 3,
- Fig. 6: eine erste perspektivische Ansicht eines Reibelementes für das Fahrpedal gemäß Fig. 2,
- Fig. 7: eine zweite perspektivische Ansicht des Reibelementes gemäß Fig. 6 für das Fahrpedal gemäß Fig. 2,
- Fig. 8: einen Querschnitt des zweiten Teils des Fahrpedales mit dem Reibelement gemäß Fig. 6 und 7 und
- Fig. 9: eine Ansicht eines Kraftfahrzeuges.

### Ausführungsformen der Erfindung

Eine Pedalwertgeberanordnung 1 wird in einem Kraftfahrzeug 22 mit einem nicht dargestellten Verbrennungs- und/oder Elektromotor als Antriebsmotor eingesetzt, um mit Hilfe eines E-Gassystems die Leistung des Antriebsmotors zu steuern und/oder zu regeln. Hierzu wird von einem Sensor 20 eine Stellung eines Fahrpedales 2 bzw. Gaspedals 2 erfasst und in Abhängigkeit von der Stellung des Fahrpedales 2 die Leistung des Antriebsmotors des Kraftfahrzeuges 22 gesteuert und/oder geregelt. Bei einem Verbrennungsmotor als Antriebsmotor wird beispielsweise ein Drosselorgan z. B. eine Drosselklappe, von einem Stellmotor bewegt und bei einem Elektromotor wird die dem Elektromotor zugeführte elektrische Leistung entsprechend gesteuert und/oder geregelt (nicht dargestellt). In einer Ausgangsstellung des Fahrpedales 2 wird von dem Antriebsmotor die minimale Leistung, z. B. als Standgas, und in einer Endstellung des Fahrpedales 2 wird von dem Antriebsmotor die maximale Leistung aktiviert. Das Kraftfahrzeug 22 verfügt somit über ein E-Gas bzw. ein E-Gassystem.

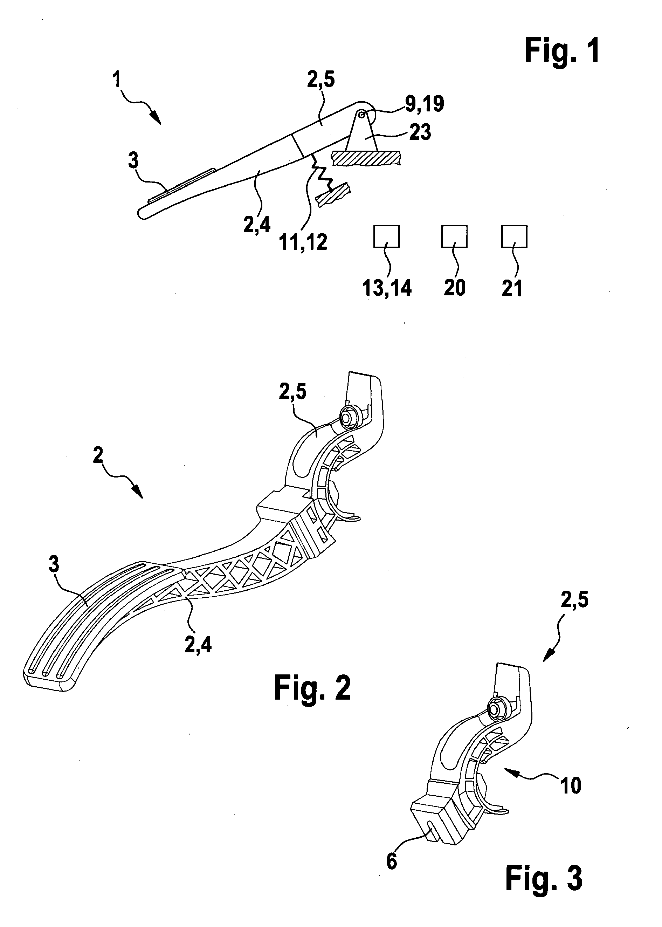

Von einer Feder 12 als elastisches Element 11 (Fig. 1) wird auf das Fahrpedal 2 eine Rückstellkraft in Richtung der Ausgangsstellung aufgebracht. Darüber hinaus ist eine als Elektromotor 14 ausgebildete Motoreinheit 13 mechanisch mittels eines Getriebes (nicht dargestellt) mit dem Fahrpedal 2 mechanisch verbunden bzw. gekoppelt. Dabei kann mit der Motoreinheit 13 sowohl eine Rückstellkraft in Richtung der Ausgangsstellung als auch eine Vorstellkraft in Richtung der Endstellung des Fahrpedales 2 auf das Fahrpedal 2 aufgebracht werden. Die Pedalwertgeberanordnung 1 stellt dabei ein aktives Fahrpedal 2 zur Verfügung. Von einem nicht dargestellten Fahrassistenzsystem des Kraftfahrzeuges 22 werden verschiedene Parameter erfasst, z. B. der Abstand zu einem vorausfahrenden Kraftfahrzeug oder die zulässige Höchstgeschwindigkeit. Wird der Abstand zu dem vorausfahrenden Kraftfahrzeug 22 unterschritten, erfolgt eine haptische Rückmeldung an einem Fuß auf dem Fahrpedal 2. Hierbei wird von dem Elektromotor 14 eine Rückstellkraft auf das Fahrpedal 2 aufgebracht, welches der Fahrer mit Hilfe des Fußes haptisch wahrnehmen kann, so dass dadurch von einer Steuerungseinheit 21 eine Handlungsanregung bzw. Handlungsaufforderung an den Fahrer des Kraftfahrzeuges 22 übermittelt werden kann, nämlich im vorliegenden Fall die Stellung des Fahrpedales 2 in Richtung zu der Ausgangsstellung zu bewegen, um dadurch den Abstand zum vorausfahrenden Fahrzeug zu verringern. Das Fahrpedal 2 ist mit einem Lager 9 um eine Schwenkachse 19 verschwenkbar gelagert. Die Schwenkachse 19 ist senkrecht zu der Zeichenebene von Fig. 1. Das Lager 9 umfasst einen Lagerbolzen an dem Fahrpedal 2 der in einer Lagerbuchse (nicht dargestellt) an einem Lagerbock 23 angeordnet bzw. gelagert ist.

Das in Fig. 1 nur sehr stark vereinfacht dargestellte Fahrpedal 2 ist zweiteilig und weist ein erstes Teil 4 und ein zweites Teil 5 (Fig. 2) auf. Am ersten unteren Teil 4 ist eine Fußauflage 3 ausgebildet und am oberen zweiten Teil 5 als Kopfbereich des Fahrpedals 2 ist eine Lagergeometrie 10 (Fig. 3) an dem zweiten Teil 5 ausgebildet. Die Lagergeometrie 10 kann auch als ein Lagerbolzen (nicht dargestellt) ausgebildet sein. Das Fahrpedal 2 ist damit an dem zweiten Teil 5 mit dem Lager 9 um die Schwenkachse 19 verschenkbar gelagert. Das erste und zweite Teil 4, 5 sind mit einer Rastverbindung 6 form- und kraftschlüssig miteinander verbunden. In Fig. 3 ist die erforderliche Geometrie für die Rastverbindung 6 an dem zweiten Teil 5 sichtbar. Bei dem Zusammenbau des Fahrpedals 2 braucht die in Fig. 3 sichtbare Geometrie zur Herstellung der Rastverbindung 6 lediglich in eine entsprechende Gegengeometrie (nicht dargestellt) an dem ersten Teil 4 des Fahrpedals 2 eingeschoben werden, sodass die Rastverbindung 6 zwischen dem ersten und zweiten Teil 4, 5 entsteht. Vorzugsweise ist aufgrund einer entsprechenden Verrastung, zum Beispiel mittels einer nicht dargestellten Rastnase, welche eine Hinterschneidung hintergreift, eine unlösbare Rastverbindung 6 zwischen dem ersten und zweiten Teil 4, 5 des Fahrpedals 2 ausgebildet. Die Rastverbindung 6 umfasst somit wenigstens eine Rastverbindungvorrichtung an dem zweiten Teil 5 und eine Rastverbindungsgegenvorrichtung an dem ersten Teil 4.

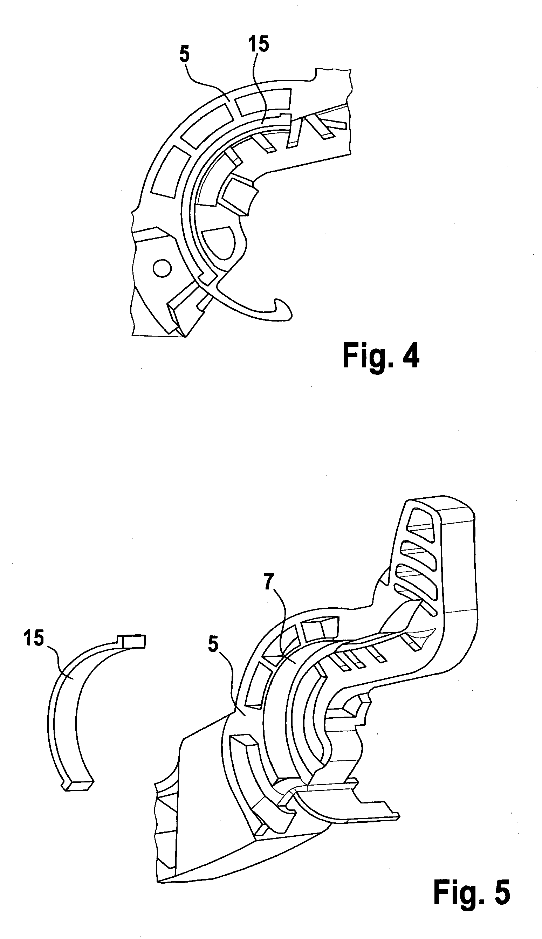

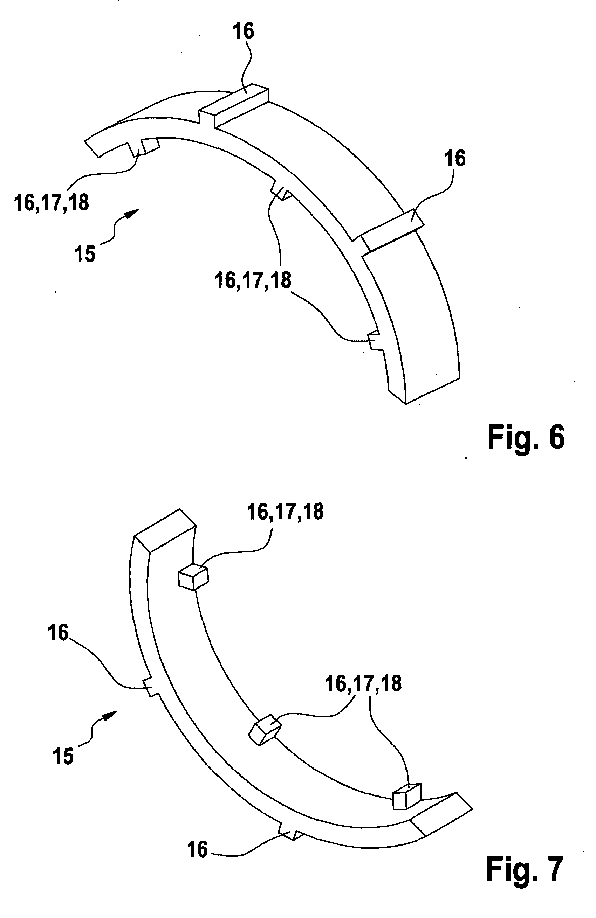

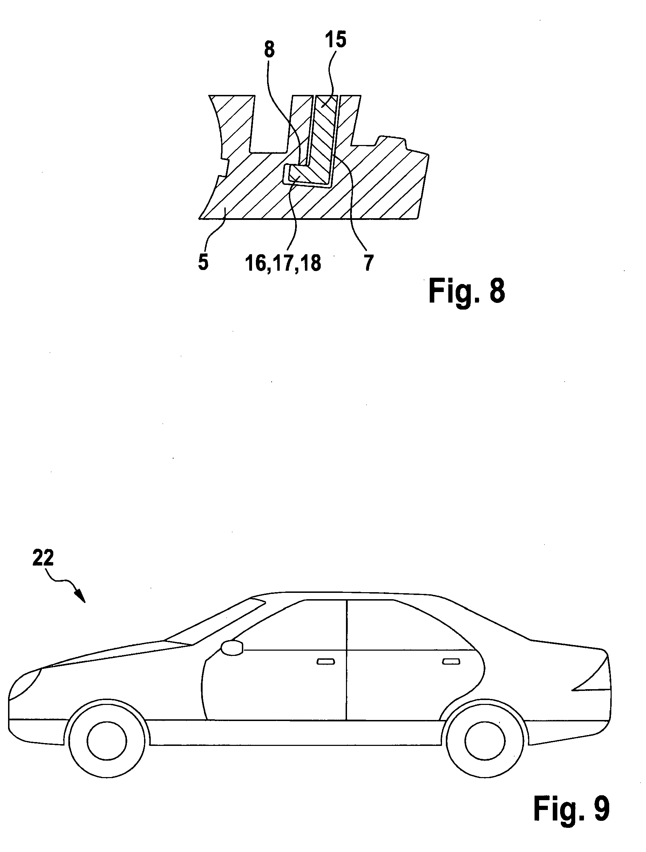

An dem zweiten Teil 5 des Fahrpedals 2 ist eine teilringförmige Aussparung 7 (Fig. 5 und 8) ausgebildet. In der Aussparung 7 ist ein ebenfalls teilringförmiges Reibelement 15 aus Santoprene angeordnet. Das teilringförmige Reibelement 15 weist eine Vielzahl von Vorsprüngen 16, zum Beispiel als Rastnase 17 oder als Haken 18, auf (Fig. 6 bis 8). In Fig. 6 und 7 ist ein Ausführungsbeispiel des Reibelements 15 dargestellt, welches nicht dem in Fig. 5 dargestellten Reibelement 15 entspricht. Fig. 8 zeigt einen Querschnitt des zweiten Teils 5 des Fahrpedals 2 mit dem in Fig. 6 und 7 dargestellten Reibelement 15. An dem zweiten Teil 5 sind Hinterschneidungen 8 an der Aussparung 7 ausgebildet und in jede Hinterschneidung 8 greift jeweils ein Vorsprung 16 als Rastnase 17 bzw. Haken 18. Dadurch ist das Reibelement 15 zuverlässig in der Aussparung 7 befestigt. Das Reibelement 15 ist elastisch verformbar, sodass bei der Herstellung des Fahrpedals 2 das Reibelement 15 lediglich in die Aussparung 7 unter einer entsprechenden Druckkraft einzuschieben ist, bis die Vorsprünge 16 als Rastnasen 17 in die Aussparungen 7 hintergreifen. Dabei wird während des Einschiebens aufgrund der Geometrie der Aussparung 7 das Reibelement 15, insbesondere die Rastnasen 17 bzw. Haken 18, zunächst elastisch verformt und nach dem Erreichen der Rastnasen 17 an den Hinterschneidungen 8 tritt eine elastische Rückverformung ein, sodass die Rastnasen 17 in den Aussparungen 7 angeordnet sind. Die den drei Rastnasen 17 gegenüberliegend ausgebildeten zwei Vorsprünge 16 sind in nicht dargestellten Schlitzen in dem zweiten Teil 5 angeordnet, so dass die Schlitze beim Einführen des Reibelementes 15 in die Aussparung 7 auch zur Führung des Reibelementes 15 dienen. Bei der Herstellung des Fahrpedals 2 für die Pedalwertgeberanordnung 1 kann somit das Reibelement 15 besonders einfach mit dem Fahrpedal 2 verbunden werden.

An dem Lagerbock 23 für das Fahrpedal 2 ist ein nicht dargestelltes Reibgegenelement ausgebildet. Das Reibgegenelement liegt dabei unter einer Druckkraft senkrecht zu der Schwenkachse 19 auf dem außen zugänglichen Teil des Reibelements 15 als Reibfläche auf. Bei einer Schwenkbewegung des Fahrpedals 2 und damit auch des zweiten Teils 5 um die Schwenkachse 19 entsteht damit eine Reibkraft zwischen dem feststehenden Reibgegenelement an dem Lagerbock 23 und dem beweglichen, das heißt verschwenkbaren Reibelement 15 an dem zweiten Teil 5 des Fahrpedals 2. Dadurch entsteht eine Reibkraft, welcher der Bewegung des Fahrpedals 2 entgegenwirkt und dadurch eine Reibhysterese an dem Fahrpedal 2 bei einer Schwenkbewegung des Fahrpedals 2 um die Schwenkachse 19 erzeugt. Die Reibfläche an dem Reibelement 15 ist an einer innenseitigen, im Querschnitt teilkreisförmigen, konkaven Fläche ausgebildet (Fig. 7).

Insgesamt betrachtet sind mit der erfindungsgemäßen Pedalwertgeberanordnung 1 wesentliche Vorteile verbunden. In dem Kraftfahrzeug 22 mit der Pedalwertgeberanordnung 1 ist im Fußraumbereich im Wesentlichen nur der erste Teil 4 des Fahrpedals 2 sichtbar. An unterschiedlichen Kraftfahrzeugen 22 soll das Fahrpedal 2 der Pedalwertgeberanordnung 1 ein unterschiedliches Aussehen aufweisen. Mit einer ansonsten identischen Pedalwertgeberanordnung 1, das heißt insbesondere dem Lager 9, dem Lagerbock 23 und dem zweiten Teil 5 des Fahrpedals 2, können durch die Verbindung von unterschiedlichen ersten Teilen 4 mit identischen Geometrien zur Herstellung der Rastverbindung 6 optisch und/oder geometrisch unterschiedliche Fahrpedale 2 zur Verfügung gestellt werden. Bei der Herstellung von Pedalwertgeberanordnung 1 braucht somit nur ein anderes erstes Teil 4 mit dem identischen zweiten Teil 5 sowie einer ansonsten identischen Pedalwertgeberanordnung 1 verbunden werden mit der Rastverbindung 6. Dadurch können in einfacher Weise preiswert unterschiedliche Pedalwertgeberanordnungen 1 mit einer unterschiedlichen Optik und/oder Geometrie bzw. einem unterschiedlichen Aussehen des Fahrpedals 2 zur Verfügung gestellt werden im Bereich der sichtbaren Fußauflage 3. Das Reibelement 15 ist besonders einfach in der Montage mit dem Fahrpedal 2 zu verbinden mithilfe der Vorsprünge 16 und der Hinterschneidungen 8, sodass dadurch mit einem geringen technischen Aufwand das Fahrpedal 2 mit den Reibelementen 15 hergestellt werden kann.

## Patentansprüche

1. Pedalwertgeberanordnung (1) für ein Kraftfahrzeug (22), umfassend
-- ein zwischen einer Ausgangsstellung und einer Endstellung bewegliches Fahrpedal (2),
-- ein Lager (9) für das Fahrpedal (2),
-- ein elastisches Element (11), insbesondere Feder (12), welche auf das Fahrpedal (2) eine Rückstellkraft in Richtung der Ausgangsstellung aufbringt, um das Fahrpedal (2) in die Ausgangsstellung zu bewegen,
- ein Reibelement (15) an dem Fahrpedal (2) zur Erzeugung einer Reibhysterese an dem Fahrpedal (2),
wobei das Reibelement (15) in einer teilringförmigen Aussparung (7) des Fahrpedales (2) angeordnet ist
**dadurch gekennzeichnet, dass**
das Reibelement (15) elastisch verformbar ist,
wobei bei der Herstellung des Fahrpedals (2) das Reibelement (15) in die Aussparung (7) unter einer entsprechenden Druckkraft einschiebbar ist,
wobei das Reibelement (15) form- und/oder kraftschlüssig mit dem Fahrpedal (2) verbunden ist.

2. Pedalwertgeberanordnung nach Anspruch 1, **dadurch gekennzeichnet, dass** das Fahrpedal (2) zweiteilig ausgebildet ist.

3. Pedalwertgeberanordnung nach Anspruch 2,
**dadurch gekennzeichnet, dass**
das zweiteilige Fahrpedal (2) ein erstes Teil (4) mit einer Fußauflage (3) und ein zweites Teil (5) vorzugsweise mit einer Lagergeometrie (10) und vorzugsweise dem Reibelement (15) umfasst.

4. Pedalwertgeberanordnung nach Anspruch 2 oder 3,
**dadurch gekennzeichnet, dass**
das erste Teil (4) und das zweite Teil (5) form- und/oder kraftschlüssig, z. B. mit einer, insbesondere unlösbaren, Rastverbindung (6), miteinander verbunden sind.

5. Pedalwertgeberanordnung nach einem der Ansprüche 2 bis 4,
**dadurch gekennzeichnet, dass**
das Fahrpedal (2), insbesondere, das erste Teil (4) und/oder das zweite Teil (5), wenigstens teilweise, insbesondere vollständig, aus Kunststoff besteht.

6. Pedalwertgeberanordnung nach einem der Ansprüche 2 bis 5,
**dadurch gekennzeichnet, dass**
das Reibelement (15) mit dem zweiten Teil (5) des Fahrpedales (2) form- und/oder kraftschlüssig verbunden ist.

7. Pedalwertgeberanordnung nach einem oder mehreren der vorhergehenden Ansprüche,
**dadurch gekennzeichnet, dass**
das Reibelement (15) wenigstens einen Vorsprung (16), vorzugsweise mehrere Vorsprünge (16), z. B. eine Rastnase (17) oder einen Haken (18), aufweist und der wenigstens eine Vorsprung (16) je eine Hinterschneidung (8) an dem Fahrpedal (2) hintergreift, so dass das Reibelement (15) formschlüssig an dem Fahrpedal (2) befestigt ist.

8. Pedalwertgeberanordnung nach Anspruch 7,
**dadurch gekennzeichnet, dass**
der wenigstens eine Vorsprung (16) einteilig mit dem Reibelement (15) ausgebildet ist.

9. Pedalwertgeberanordnung nach einem oder mehreren der vorhergehenden Ansprüche,
**dadurch gekennzeichnet, dass**
das Reibelement (15) wenigstens teilweise, insbesondere vollständig, aus einem 5 thermoplastischen Elastomer oder Kunststoff, z. B. Santoprene, besteht.

10. Pedalwertgeberanordnung nach einem oder mehreren der vorhergehenden Ansprüche,
**dadurch gekennzeichnet, dass**
das Fahrpedal (2) mit dem Lager (9), insbesondere um eine Schwenkachse (19) verschwenkbar, gelagert ist
und/oder
die Pedalwertgeberanordnung (1) einen Sensor (20) zur Erfassung einer Stellung des Fahrpedales (2) und/oder eine Motoreinheit (13), von welcher auf das Fahrpedal (2) eine Rückstellkraft in Richtung der Ausgangsstellung aufbringbar ist, umfasst.

## Claims

1. Pedal position sensor arrangement (1) for a motor vehicle (22), comprising
- an accelerator pedal (2) which can be moved between a starting position and an end position,
- a bearing (9) for the accelerator pedal (2),
- an elastic element (11), in particular a spring (12) which applies a restoring force in the direction of the starting position on the accelerator pedal (2), in order to move the accelerator pedal (2) into the starting position,
- a friction element (15) on the accelerator pedal (2) for producing friction hysteresis on the accelerator pedal (2),
the friction element (15) being arranged in a partially annular cut-out (7) of the accelerator pedal (2), **characterized in that**
the friction element (15) can be deformed elastically, it being possible for the friction element (15) to be pushed into the cut-out (7) under a corresponding compressive force during the manufacture of the accelerator pedal (2),
the friction element (15) being connected to the accelerator pedal (2) in a positively locking and/or non-positive manner.

2. Pedal position sensor arrangement according to Claim 1, **characterized in that** the accelerator pedal (2) is configured in two parts.

3. Pedal position sensor arrangement according to Claim 2, **characterized in that** the two-part accelerator pedal (2) comprises a first part (4) with a footrest (3) and a second part (5) preferably with a bearing geometry (10) and preferably the friction element (15).

4. Pedal position sensor arrangement according to Claim 2 or 3, **characterized in that** the first part (4) and the second part (5) are connected to one another in a positively locking and/or non-positive manner, for example by way of a latching connection (6) which is, in particular, non-releasable.

5. Pedal position sensor arrangement according to one of Claims 2 to 4, **characterized in that** the accelerator pedal (2), in particular the first part (4) and/or the second part (5), are/is composed of plastic at least partially, in particular completely.

6. Pedal position sensor arrangement according to one of Claims 2 to 5, **characterized in that** the friction element (15) is connected to the second part (5) of the accelerator pedal (2) in a positively locking and/or non-positive manner.

7. Pedal position sensor arrangement according to one or more of the preceding claims, **characterized in that** the friction element (15) has at least one projection (16), preferably a plurality of projections (16), for example a latching lug (17) or a hook (18), and the at least one projection (16) engages behind in each case one undercut (8) on the accelerator pedal (2), with the result that the friction element (15) is fastened to the accelerator pedal (2) in a positively locking manner.

8. Pedal position sensor arrangement according to Claim 7, **characterized in that** the at least one projection (16) is configured in one part with the friction element (15).

9. Pedal position sensor arrangement according to one or more of the preceding claims, **characterized in that** the friction element (15) is composed at least partially, in particular completely, of a thermoplastic elastomer or plastic, for example Santoprene.

10. Pedal position sensor arrangement according to one or more of the preceding claims, **characterized in that** the accelerator pedal (2) is mounted by way of the bearing (9), in particular such that it can be pivoted about a pivot axis (19), and/or the pedal position sensor arrangement (1) comprises a sensor (20) for detecting a position of the accelerator pedal (2) and/or a motor unit (13), by which a restoring force in the direction of the starting position can be applied to the accelerator pedal (2).

## Revendications

1. Agencement de capteur de pédale (1) pour un véhicule automobile (22), comprenant
- une pédale d'accélération (2) déplaçable entre une position de départ et une position de fin de course,
- un palier (9) pour la pédale d'accélération (2),
- un élément élastique (11), en particulier un ressort (12) qui applique à la pédale d'accélération (2) une force de rappel dans la direction de la position de départ afin de déplacer la pédale d'accélération (2) dans la position de départ,
- un élément de friction (15) sur la pédale d'accélération (2) pour générer une hystérésis de friction au niveau de la pédale d'accélération (2),
l'élément de friction (15) étant disposé dans un évidement en forme d'anneau partiel (7) de la pédale d'accélération (2),
**caractérisé en ce que**
l'élément de friction (15) est déformable élastiquement,
l'élément de friction (15), lors de la fabrication de la pédale d'accélération (2), pouvant être enfoncé dans l'évidement (7) sous l'effet d'une force de pression correspondante,
l'élément de friction (15) étant connecté par engagement par correspondance de formes et/ou par force à la pédale d'accélération (2).

2. Agencement de capteur de pédale selon la revendication 1, **caractérisé en ce que** la pédale d'accélération (2) est réalisée en deux parties.

3. Agencement de capteur de pédale selon la revendication 2,
**caractérisé en ce que**
la pédale d'accélération en deux parties (2) comprend une première partie (4) avec un appui pour les pieds (3) et une deuxième partie (5) de préférence avec une géométrie de palier (10) et de préférence l'élément de friction (15).

4. Agencement de capteur de pédale selon la revendication 2 ou 3,
**caractérisé en ce que**
la première partie (4) et la deuxième partie (5) sont connectées l'une à l'autre par engagement par correspondance de formes et/ou par force, par exemple par une connexion par encliquetage (6), notamment non détachable.

5. Agencement de capteur de pédale selon l'une quelconque des revendications 2 à 4,
**caractérisé en ce que**
la pédale d'accélération (2), en particulier la première partie (4) et/ou la deuxième partie (5), se compose au moins en partie, notamment complètement, de matière plastique.

6. Agencement de capteur de pédale selon l'une quelconque des revendications 2 à 5,
**caractérisé en ce que**
l'élément de friction (15) est connecté par engagement par correspondance de formes et/ou par force à la deuxième partie (5) de la pédale d'accélération (2).

7. Agencement de capteur de pédale selon l'une quelconque ou plusieurs des revendications précédentes,
**caractérisé en ce que**
l'élément de friction (15) présente au moins une saillie (16), de préférence plusieurs saillies (16), par exemple un ergot d'encliquetage (17) ou un crochet (18), et l'au moins une saillie (16) vient en prise par l'arrière à chaque fois avec une contre-dépouille (8) au niveau de la pédale d'accélération (2), de sorte que l'élément de friction (15) soit fixé par engagement par correspondance de formes sur la pédale d'accélération (2).

8. Agencement de capteur de pédale selon la revendication 7,
**caractérisé en ce que**
l'au moins une saillie (16) est réalisée d'une seule pièce avec l'élément de friction (15).

9. Agencement de capteur de pédale selon l'une quelconque ou plusieurs des revendications précédentes,
**caractérisé en ce que**
l'élément de friction (15) se compose au moins en partie, en particulier complètement, d'un élastomère thermoplastique ou d'une matière plastique, par exemple de Santoprène.

10. Agencement de capteur de pédale selon l'une quelconque ou plusieurs des revendications précédentes,
**caractérisé en ce que**
la pédale d'accélération (2) est supportée avec le palier (9), de manière à pouvoir pivoter notamment autour d'un axe de pivotement (19),
et/ou
l'agencement de capteur de pédale (1) comprend un capteur (20) pour détecter une position de la pédale d'accélération (2) et/ou une unité de moteur (13), par le biais de laquelle une force de rappel peut être appliquée sur la pédale d'accélération (2) dans la direction de la position de départ.
